# EUROPEAN PATENT APPLICATION

(11) **EP 4 571 622 A1**
(43) Date of publication of application: **18.06.2025**
(21) Application number: 24220119.2
(22) Date of filing: 16.12.2024
(51) Int. Cl.: G06Q 30/018, G06Q 30/0601

(54) **SYSTEM AND METHOD FOR BILATERAL TRADES OF GREENHOUSE GASES AND ENVIRONMENTAL RIGHTS**

(30) Priority: 15.12.2023 US 202318541283
(71) Applicant: Abaxx Technologies Corp., BB14030 Christ Church (BB)
(72) Inventor: CRUMB, Joshua, BB14030 Christ Church (BB); LIPTON, Jeff, BB14030 Christ Church (BB)
(74) Representative: Lind Edlund Kenamets Intellectual Property AB

(57) **Abstract**

A computer-implemented method, a system, and a non-transitory computer readable medium for the collection, monetization, validation, continuous updating, archiving for bilateral trades of greenhouse gases and environmental rights. The method includes hosting, on a processing server, a listing of one or more parcels of land with contractual rights to develop carbon offset credits; receiving, by the processing server, metrics on the one or more parcels of land with the contractual rights to develop carbon offset credits; and verifying, on the processing server, that the one or more parcels of land with the contractual rights to develop carbon offset credits comply with one or more conditions for development and potential entitlement to carbon offset credits based on at least the received metrics.

## Description

### TECHNICAL FIELD

The present disclosure generally relates to a system and method for the collection, monetization, validation, continuous updating, and archiving of bilateral transfer of greenhouse gases and environmental rights and the rights to exploit those greenhouse gases and environmental rights.

### BACKGROUND

Greenhouse Gases and environmental rights credits, e.g., biodiversity rights which include, carbon credits, which can be tradable certificates or permits representing the right to emit a defined amount of emissions, e.g., one ton (one metric ton or 1,000 kilograms) of carbon dioxide or the equivalent amount of a different greenhouse gas. Biodiversity rights which include carbon credits and carbon markets are a component of national and international attempts to mitigate the growth in concentrations of greenhouse gases (GHGs).

### SUMMARY

It would be desirable to have a system and method for the creation, creation, management and transaction of greenhouse gases and environmental rights (GEARS^{™}) between an owner of these rights, or a third party purchaser and seller, which allows a holder of the rights a contractual ability to monetize these rights through validation in a binding and secure manner and enable the holder of the rights to transfer or trade or assist in the development of greenhouse gases and environmental rights credits, e.g., biodiversity and carbon offset credits, on a specific parcel of land, prior to the greenhouse gases and environmental rights credits being developed or otherwise issued, e.g., before registration of a carbon credit certification process by a third party registry or validation service.. The system and method disclosed herein further verifies and updates the greenhouse gases and environmental rights available for development on an associated one or more parcels of land. The contractual rights to develop greenhouse gases and environmental rights credits, e.g. biodiversity and, carbon offset credits, needs to also comply with one or more conditions for development and entitlement to greenhouse gases and environmental rights credits, e.g., biodiversity and carbon offset credits. The methods and systems disclosed herein deals with the greenhouse gases and environmental rights prior to certification as a greenhouse gas and environmental rights credit, e.g., a biodiversity or carbon offset credit. Thus, the disclosed methods and systems overcome or mitigate technological challenges, and significant costs of development and processing of greenhouse gases and environmental rights prior to registration of those greenhouse gases and environmental rights as greenhouse gases and environmental rights credits, e.g., carbon credits, and allow greenhouse gases and environmental rights associated with land to be secured and monetized particularly with respect to authentication, verification, trading, and record keeping that can be relied upon.

In accordance with an aspect, a computer-implemented method is disclosed for creation, creation, management and transaction of greenhouse gases and environmental rights, the method comprising: hosting, on a processing server, a listing of one or more parcels of land with contractual rights to develop greenhouse gases and environmental rights credits; receiving, by the processing server, metrics on the one or more parcels of land with the contractual rights to develop greenhouse gases and environmental rights credits; and verifying, on the processing server, that the one or more parcels of land with the contractual rights to develop greenhouse gases and environmental rights credits that comply with one or more conditions for development and potential entitlement to greenhouse gases and environmental rights credits based on at least the received metrics.

In accordance with another aspect, a system is disclosed for creation, management and transaction of these rights as they relate to greenhouse gases and environmental rights, the system comprising: a processing server configured to: host a listing of one or more parcels of land with contractual rights to develop greenhouse gases and environmental rights or credits; receive metrics on the one or more parcels of land with the contractual rights to develop greenhouse gases and environmental rights or credits; and verify that the one or more parcels of land with the contractual rights to develop greenhouse gases and environmental rights or credits comply with one or more conditions for development and potential entitlement to greenhouse gases and environmental rights or credits based on at least the received metrics.

The valuation of the contractual rights to develop greenhouse gases and environmental rights associated with each of the one or more parcels of land may be one of a monetary value of the contractual rights for each of the one or more parcels of land, or an estimated total of greenhouse gases and environmental rights credits likely to be developed for each of the one or more parcels of land.

The processing server may further be configured to record, on a blockchain associated with the processing server, the metrics of the one or more parcels of land with the contractual rights to develop greenhouse gases and environmental rights credits.

The processing server may further be configured to register a plurality of market participants, the plurality of market participants participating in one or more of a sale, a purchase, or a third-party activity in a development of greenhouse gases and environmental rights credits of the one or more parcels of land with the contractual rights to develop greenhouse gases and environmental rights credits being hosted by the processing server; and to grant one or more of the plurality of market participants access to data on a portal for the sale, the purchase, or the third-party activity in the development of the greenhouse gases and environmental rights credits for the one or more parcels of land with the contractual rights to develop greenhouse gases and environmental rights t credits.

The processing server may further be configured to present the listing of the one or more parcels of land with contractual rights to develop greenhouse gases and environmental rights credits via graphical user interface (GUI), the GUI enabling one or more market participants to participate in one or more of a sale, a purchase, or a third-party activity in a development of the greenhouse gases and environmental rights credits of the one or more parcels of land with the contractual rights to develop greenhouse gases and environmental rights credits being hosted by the processing server.

The hosting of a listing of the one or more parcels of land with contractual rights to develop greenhouse gases and environmental rights credits may include receiving a request to list a parcel of land of the one or more parcels of land with contractual rights to develop greenhouse gases and environmental rights credits; and the processing server may further be configured to, in response to the verifying that the parcel of land of the one or more parcels of land complies with the one or more conditions for development and potential entitlement to greenhouse gases and environmental rights credits based on at least the received metrics, execute, using a smart contract, a transfer of the contractual rights to develop greenhouse gases and environmental rights credits for the parcel of land of the one or more parcels of land from a seller to an intermediary entity.

In accordance with a further aspect, a non-transitory computer readable medium storing computer readable program code that, when executed by a processor, causes the processor to provide an exchange for creation, management and transaction ofgreenhouse gases and environmental rights, the program code comprising instructions for: hosting a listing of one or more parcels of land with contractual rights to develop greenhouse gases and environmental rights or credits; receiving metrics on the one or more parcels of land with the contractual rights to develop greenhouse gases and environmental rights or credits; and verifying that the one or more parcels of land with the contractual rights to develop greenhouse gases and environmental rights or credits comply with one or more conditions for development and potential entitlement to greenhouse gases and environmental rights or credits based on at least the received metrics.

### BRIEF DESCRIPTION OF THE DRAWINGS

FIG. 1 is an illustration of a system for creation, management and transaction ofgreenhouse gases and environmental rights (GEARS^{™}) in accordance with an exemplary embodiment.
FIGS. 2A and 2B are illustrations of a flowchart of a method for creation, management and transaction of greenhouse gases and environmental rights (GEARS^{™}) for development of a parcel of land for greenhouse gases and environmental rights or credits in accordance with an exemplary embodiment.
FIG. 3 is an illustration of a graphical user interface (GUI) and amobile device for verifying a market participant to an exchange in accordance with an exemplary embodiment.
FIG. 4 is an illustration of a graphical user interface (GUI) of a portal with a plurality of exchange applications in accordance with an exemplary embodiment.
FIG. 5 is a flowchart illustrating a method for creation, management and transaction of greenhouse gases and environmental rights (GEARS^{™}) in accordance with an exemplary embodiment.
FIG. 6 illustrates an exemplary hardware architecture for an embodiment of a computer system.

### DETAILED DESCRIPTION

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments.

As used herein, the term "seller" will be understood to be, as indicated by context, interchangeable with "owner", "offering party" or "user". The "seller" will be understood to mean a user with authority to offer a contract for sale, for example, for GEARS. The term "buyer" or "purchaser" will be understood to mean a user with authority to purchase the contract rights from the "seller". It is also contemplated that contracts may be bought and sold or syndicated multiple times before delivery to an ultimate user, and thus a user who is a "buyer" in a first transaction offering instance may become a "seller" in a second transaction offering instance. Further, both "seller" and/or "buyer" can be computers that are specifically programmed to be special purpose computers to buy and sell at certain events, thresholds in demand, availability, societal attitude and needs, environmental criteria, party identities, and other factors as programmed through software including machine learning programs and artificial intelligence (Al) programs.

As used herein, the term "right to exploit" will be understood to be, as indicated by context, an exclusive right to exploit, conserve, protect, explore, develop, mine, beneficiate, market, and sell greenhouse gases and environmental rights in respect of a defined plot of land regardless of whether a third-party validator or registry or like agency ever issues any type of credit or right

As used herein, the term greenhouse gases and environmental rights ("GEARS") will be understood to include any and all "rights to exploit," which includes, but is not limited to, an exclusive right to exploit, conserve, protect, explore, develop, mine, beneficiate, market and sell greenhouse gases and environmental rights of a defined plot of land, e.g., a parcel of land. GEARS will also be understood to include any and all "rights to biodiversity," which includes, but is not limited to, the variability among living organisms from all sources, including terrestrial, marine and other aquatic ecosystems and the ecological complexes of which they are part (including diversity within species, between species and of ecosystems) of a defined plot of land, e.g., a parcel of land.

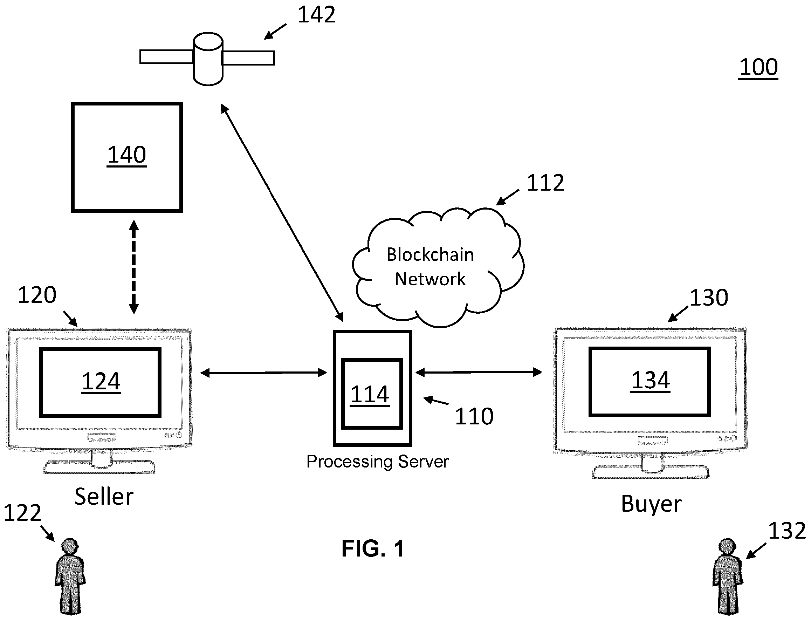

FIG. 1 illustrates a diagram of a system for the creation, management and transaction of GEARS^{™} between a seller 122 and a purchaser or buyer 132, which allows the holder of the rights to the development of a parcel of land (which as used herein includes any measure of land area) 140 for greenhouse gases and environmental rights credits, e.g., carbon offset credits. The parcel of land 140 can be any property for which contractual rights for the development of greenhouse gases and environmental rights credits can exist including, but not limited to, terrestrial land and water, maritime space, and airspace, etc. As shown in FIG. 1, the system 100 can include the seller 122 and the buyer 132, and wherein the seller 122and the buyer 132 having access to one or more computing devices (seller computer 120, buyer computer 130 as exemplary embodiments for illustration purposes). The computing devices 120, 130 being in communication, for example, with a processing server 110, which is configured as a marketplace or exchange, e.g., the GEARS^{™} portal 114, for processing transactions between sellers 122 and buyers 132 of the GEARS. The computing devices 120, 130 can include graphical user interfaces (GUI) 124, 134 for interacting with the GEARS^{™} portal 114. The graphical user interfaces 124, 134 can include components used to receive input from the computing devices 120, 130 and transmit the input to the GEARS^{™} portal 114 hosted by the processing server 110, or conversely to receive information from the GEARS^{™} portal 114 and display the information on the computing devices 120, 130, e.g., via a display. In an example embodiment, the graphical user interfaces 124, 134 use a combination of technologies and devices, such as device drivers, to provide a platform to enable a user, e.g., the seller 122 and/or the buyer 132, of the computing devices 120, 130 to interact with the GEARS^{™} portal 114. In the example embodiment, the graphical user interfaces 124, 134 receives input from a physical input device, such as a keyboard, mouse, touchpad, touchscreen, camera, microphone, remote, etc. For example, the graphical user interfaces 124, 134 may receive a user selection of one or more parcels of land 140 listed on the GEARS^{™} portal 114 to display information, e.g., metrics as discussed in more detail below, associated with the one or more parcels of land 140. Further, the graphical user interfaces 124, 134 may receive a user input regarding the transaction and/or management of GEARS associated with one or more parcels of land 140 listed in the GEARS^{™} portal 114.

In accordance with an exemplary embodiment, the transaction between the seller 122 and the buyer (or purchaser) 122 can be for GEARS, which can be a right that is granted separate from the underlying land rights of ownership of the parcel of land 140. The GEARS allows the holder the contractual ability to develop environmental rights credits, e.g., biodiversity and carbon offset credits, on that specific parcel of land 140. In addition, the GEARS^{™} can be, for example, a retail-oriented product that allows for greater participation and access to greenhouse gases and environmental rights market investing and ownership once facilitated by the system and method disclosed herein.

As set forth above, an example greenhouse gases and environmental rights or offset credit is a carbon offset credit, which is a certificate representing the reduction of one metric ton (2,205 lbs.) of carbon dioxide emissions. The carbon credit is a permit or certificate that allows the holder of the carbon offset credit to emit carbon dioxide (CO2) or other greenhouse gases (GHG) into the atmosphere. For example, the holder of the carbon offset credit can be a developer of a project that reduces carbon dioxide emissions, and where every metric ton (ton) of emissions reduced results in the creation of one carbon offset credit. The greenhouse gases and environmental rights credits can be financial instruments that are generated by projects that reduce or avoid the release of greenhouse gases (GHGs). In accordance with an exemplary embodiment, the rights provided by the GEARS, for example, would allow the holder of the GEARS to be able to develop greenhouse gases and environmental rights credits, e.g., biodiversity and carbon offset credits, on a specific parcel of land 140 for a stated period of time (for example, 20 years to 50 years). The GEARS rights are mutually exclusive to the formal subsequent process whereby the owner further processes or affords formal registration and development with a greenhouse gases and environmental rights registry, e.g., a carbon credit registry, to create credits and remain a tradeable asset class. The GEARS rights created may not necessarily have economic value as a transferable or tradable credit but afford the holder the beneficial value of a positive environmental outcome which may also include public relations, social media benefits or simply for the benefit of humanity.

In accordance with an exemplary embodiment, the rights under GEARS can be purchased, for example, for an initial consideration and an additional return to the seller 122 in the form of a percentage of the amount of future greenhouse gases and environmental rights credit(s) when and if the parcel of land 140 is developed and the greenhouse gases and environmental rights credits are sold and/or used by the buyer (or purchaser) 132. The buyer (or purchaser) 132 of the GEARS, for example, a purchaser company would obtain transferable rights that could be resold or fractionalized for further sales, for example, retail or institutional sales, and wherein the underlying value of the GEARS would allow for future development of greenhouse gases and environmental rights credits.

In accordance with an exemplary embodiment, a contractual right under GEARS could be to develop a specific parcel of land 140 for greenhouse gases and environmental rights credits, e.g., carbon credits, without necessarily specifying the specific way the credits would be developed. In addition, the rights from the GEARS can attach to the parcel of land 140 specific to the commercialization or development, for example, of greenhouse gases and environmental rights credits only as well as individualize the remuneration of fee split and contributions of the parties.

Carbon offset registries track offset projects and issue offset credits for each unit of emission reduction or removal that can be verified and certified using the presently disclosed system and method. For example, the specific land title metrics for a piece of land, e.g. the parcel of land 140, subject to an offset project can be captured by the monitoring system 142 and verified using the methods described in more detail below.

Registries are vital in creating a credible, fungible offset commodity by recording the ownership of existing issued carbon credits. Credits, for example, can be issued from any of the major registries for carbon standards (for example, Climate Action Reserve (CAR), Verified Carbon Standard (VCS), American Carbon Registry (ACR), the Gold Standard (GS)) and will have undergone a robust verification process by an International Organization for Standards (ISO) accredited third-party verifier. These credits are also all tracked by the registries to ensure emissions reductions are not double counted and the credit is taken out of the marketplace to warrant that it can only be claimed once (referred to as retirement of the credit). Once projects have been certified against one or more of the major registries rigorous set of rules and requirements, project developers can be issued tradable verified credits.

In accordance with an exemplary embodiment, the GEARS is not a registered or certified environmental rights credit, but GEARS rights are the rights to develop the parcel of land 140, e.g., embodying the rights to exploit an environmental outcome that could include a biodiversity or carbon offset credit development on the parcel of land 140. In addition, GEARS rights are precursor transferable rights allowing the holder the ability to develop greenhouse gases and environmental rights credits regardless of whether such development of the parcel of land 140 and earning of greenhouse gases and environmental rights credits is performed over the life of the contract.

The buyer (or purchaser) 132, for example, a purchaser company would also allow for the verification of the greenhouse gases and environmental rights credit as well as the retirement of the greenhouse gases and environmental rights credit once created. In accordance with an exemplary embodiment, the verification of the greenhouse gases and environmental rights credit can be different than that of registries and would take place regardless of whether the underlying rights were ever developed. In addition, verification of the greenhouse gases and environmental rights credit over the life of GEARS, for example, could use a blockchain 112 recording methodology unique to greenhouse gases and environmental rights credits, e.g., carbon credit, development for continuously updating, and verifying the information known about the GEARS, as well as all ancillary and trade information.

In accordance with an exemplary embodiment, a monitoring system 142 is employed to record land metrics and any changes in the status of the underlying land, e.g., the parcel of land 140, associated with GEARS including, but not limited to, physical changes, visual changes, climate changes, usage changes, etc. The metrics obtained for the one or more parcels of land 140 will include one or more of area precipitation, area temperature, climate changes, air quality changes, changes in land usage or morphability, publicly disseminated information, permitting information, contractual information, registration information, zoning information, and ownership changes affecting the area covered by the GEARS, as well as any specific documentation from any environmental standard verification organization if and when there is development or changes on the parcel of land 140, etc.. For example, in accordance with an exemplary embodiment, the monitoring system 142 can include one or more sensors located on or near the one or more parcels of land 140, and/or an imaging system configured to obtain metrics of the one or more parcels of land 140. The monitoring system 142 can be installed or otherwise positioned on or near the one or more parcels of land 140 and/or deployed on any suitable vehicle such as, but not limited to, a satellite imaging system, an aircraft, a drone, a balloon, a boat, a submarine, and/or a land vehicle depending on terrain of the one or more parcels of land 140.The one or more sensors of the monitoring system 142 can include, but not limited to, a camera, a radar, a lidar, an ultrasonic sensor, a photoelectric sensor, a sonar, an infrared sensor, an ultraviolet sensor, a thermal sensor, an air quality sensor, or any other suitable sensor for detecting and collecting metrics of the one or more parcels of land 140. The monitoring system 142 can detect and/or record the metrics and any changes in the status of the underlying land, e.g., the parcel of land 140, periodically at defined intervals (e.g., every week, every, month, etc.), continuously, randomly, or at any other suitable time interval. The monitoring system 142 can transmit the metrics of the one or more parcels of land 140 to the processing server 110 for verification and certification purposes. The processing server 110 can store the metrics of the one or more parcels of land 140 on a blockchain, e.g., via the blockchain network 112, along with data related to the monitoring system 142 and/or the one or more parcels of land 140 such as, but not limited to, the testing and measurement technique, entity information of the monitoring system 142, date and time of metric collection, parcel identification of the parcel of land 140 to which the metrics correspond (e.g., to avoid double counting), etc. In accordance with an exemplary embodiment, the verification and certification of the metrics of the parcel of land 140 can be done using one or more machine learning algorithms, and/or neural networks as discussed in more detail below. In addition, the monitoring system 142 can include smart sensing technology that collects metrics about a state, for example, of the trees and/or crops on the one or more parcels of land 140, which are being developed for greenhouse gases and environmental rights credits, e.g., carbon offset credits. For example, the metrics can include one or more of a temperature, humidity, and/or one or more health indicators of the trees and/or crops on the one or more parcels of land 140. In some embodiments, testing can be done to determine the actual amount of one or more greenhouse gases, e.g., carbon, being taken out of the atmosphere by the parcel of land 140 by calculating the biomass of the parcel through estimation models based on various factors.

For example, for trees on the parcel of land 140, factors such as tree size, wood density and species are physical attributes that are then related to carbon capture through allometric equations, for example. The total carbon captured by a tree over its lifetime or expected lifetime can be determined by its biomass and these factors, and then the amount of atmospheric carbon that has be calculated can be derived through a ratio, e.g., carbon to CO₂ as 12.44. A sampling of trees in random selection can be used to estimate the carbon capture of the one or more parcels of land 140, as an example. The monitoring system 142 can automate data collecting by gathering information such as diameter at breast height, total tree height, crown size, and species through the one or more sensors of the monitoring system 142. These measurements are then used to estimate the total biomass in the parcel of land 140 using allometric equations. The biomass density of a whole forest can be estimated by taking the average of a plurality of the one of defined areas of the forest and using that average to make the calculation for the whole forest. In traditional methods and systems, biomass calculation is time consuming and costly as traditional methods and systems require manual field measurement by humans. By using the disclosed monitoring system 142, the biomass calculation of an area, e.g., the parcel of land 140, the costs, time, and complexity of the process are greatly reduced, and accuracy of the calculation is improved. If the growth of the trees on the parcel of land 140 over time can be estimated, so can the amount of carbon captured by the parcel of land 140 each year.

In accordance with an exemplary embodiment, the calculation of the actual amount of one or more greenhouse gases, e.g., carbon, potentially being taken out or predicted to be able to be taken of the atmosphere by the parcel of land 140 can be determined by the monitoring system 142 and/or the processing server 110 using one or more machine learning algorithms and/or neural networks. For example, a machine learning algorithm and/or a neural network may be trained using the data captured by the monitoring system 142 resulting in a machine learning algorithm and/or neural network capable of outputting a calculation of the actual amount of one or more greenhouse gases, e.g., carbon, being taken out of the atmosphere by the parcel of land 140. Alternatively, a machine learning algorithm and/or a neural network may be trained using data from one or more datasets in which the amount of one or more greenhouse gases, e.g., carbon, being taken out of the atmosphere by one or more pieces of land, e.g., the parcel of land 140, is known. Further, data related to future development of the parcel of land 140, e.g., carbon offset credits actually developed, can be used as training data for the machine learning algorithm and/or a neural network. The monitoring system 142 and/or the processing server 110 may utilize any suitable type of machine learning algorithm such as, but not limited to, a supervised machine learning algorithm, a semi-supervised machine learning algorithm, an unsupervised machine learning algorithm, and/or a reinforcement machine learning algorithm. Types of machine learning algorithms and/or neural networks the monitoring system 142 and/or the processing server 110 may utilize include, but are not limited to, deep learning algorithms, artificial neural networks, convolutional neural networks (CNN), recurrent neural networks (RNN), generative adversarial neural networks (GANN), feedforward neural networks (FNN), or any other suitable machine learning algorithms and/or neural networks capable of determining a calculation of the actual amount of one or more greenhouse gases, e.g., carbon, being taken out of the atmosphere by the parcel of land 140. Once the machine learning algorithm and/or neural network used by the monitoring system 142 and/or the processing server 110 is trained, the metrics captured for the parcel of land 140 can be input into the trained machine learning algorithm and/or neural network and the machine learning algorithm and/or neural network can output data to the monitoring system 142 and/or the processing server 110, which can generate a report indicating the amount of one or more greenhouse gases, e.g., carbon, being taken out of the atmosphere by the parcel of land 140 based on the data output of the machine learning algorithm and/or neural network. While capture of one or more greenhouse gases is discussed above, it can be appreciated that the monitoring system 142 and/or processing server 110 can use a machine learning algorithm and/or neural network to analyze any one of or combination of the metrics captured for the parcel of land 140. For example, but not limited to, a machine learning algorithm and/or neural network can be utilized to determine usage, topography, vegetation, climate, etc. associated with the parcel of land 140 based on the captured metrics of the parcel of land 140. As discussed above, the machine learning algorithm and/or neural network for analyzing the metrics can be trained, e.g., via the monitoring system 142 and/or the processing server 110, using previously verified metrics captured for one or more parcels of land 140 and/or using one or more datasets including verified metrics for one or more parcels of land 140. The machine learning algorithm and/or neural network can output data to the monitoring system 142 and/or the processing server 110, which can generate a report on the parcel of land 140 including one or more of the above metrics, such as, but not limited to, usage, topography, vegetation, and climate, etc. of the parcel of land 140 in addition to or separate from the report indicating the amount of one or more greenhouse gases, e.g., carbon, being taken out of the atmosphere by the parcel of land 140. The reports generated by the monitoring system 142 and/or the processing server 110 from the output of the one or more machine learning algorithms and/or neural networks can be stored on the blockchain with reference to the underlying parcel of land 140 to which they pertain, e.g., as a transaction on the blockchain. Further, the reports generated by the monitoring system 142 and/or the processing server 110 from the output of the one or more machine learning algorithms and/or neural networks can be displayed to a user, e.g., the seller 122 and/or the buyer 132, on the GEARS^{™} portal 114, e.g., via the GUI 124, 134.

In accordance with an exemplary embodiment, the verification process of the metrics captured by the monitoring system 142 can also include outputting to one or more of the computing devices 110, 120, 130, for example, to the processing server 110 that the one or more parcels of land 140 is not in compliance with one or more conditions for development and entitlement to greenhouse gases and environmental rights credits based on at least one or more of the received metrics. In addition, if the verification result is a finding of non-compliance, an instruction can be sent to the monitoring system 142, for example, to the one or more sensors, or the one or more vehicles, to obtain additional metrics and re-verify the condition of the one or more parcels of land 140. In accordance with an exemplary embodiment, if the one or more parcels of land140 are still non-compliant, the processing server 110, for example, can notify the seller 122 or the buyer 132 (e.g., parties to the contractual agreement, potential developers or any party interested in the rights to exploit) and/or a government entity that the one or more parcels of land 140 are not in compliance with the one or more conditions for development and entitlement to greenhouse gases and environmental rights credits.

In accordance with an exemplary embodiment, the verification of the GEARS and corresponding information obtained, e.g., the metrics captured by the monitoring system 142, could be stored in a blockchain, e.g., via the blockchain network 112, format to enhance the veracity of the information gathered and obtained via the monitoring system 142. In addition, the metrics gathered on the one or more parcels of land 140 would be accessible to sellers 122 and buyers 132 through the GEARS^{™} portal 114, e.g., via the GUI 124, 134, hosted on the processing server 110 as disclosed herein. In addition, the metrics gathered on the one or more parcels of land 140 could be updated frequently, for example, on a weekly, monthly, and/or yearly basis. The metrics gathered on the one or more parcels of land 140 would also be made accessible to both the seller 122 and the buyer or purchaser 132, for example, to verify that the GEARS are being properly utilized via the GEARS^{™} portal 114.

In accordance with an exemplary embodiment, the blockchain network (or blockchain) 112 can be a public, permissioned or private ledger of all transactions of a blockchain-based network. One or more computing devices may comprise a blockchain network, which may be configured to process and record transactions as part ofa block in the blockchain. Once a block is completed, the block is added to the blockchain, and the transaction record thereby updated. In many instances, the blockchain may be a ledger of transactions in chronological order or may be presented in any other order that may be suitable for use by the blockchain network 112. In some configurations, transactions recorded in the blockchain may include a destination address, such that the blockchain records provide updates to information that is being recorded on the blockchain for GEARS that have been sold or purchased by the seller 122 or buyer 132, along with information relating to the verification and certification of the metrics of the one or more parcels of land 140, e.g., an amount of carbon capture (verification method, date, time, entity controlling the verification and certifying the results, etc.). In some instances, the blockchain transactions might include additional or different information, such as a source address, timestamp, etc. In some embodiments, a blockchain may also or alternatively include nearly any type of data as a form of transaction that is or needs to be placed in a distributed database that maintains a continuously growing list of data records hardened against tampering and revision, even by its operators, and may be confirmed and validated by the blockchain network 112 through proof of work and/or any other suitable verification techniques associated therewith, thus providing an immutable record that can be relied upon for accuracy while being observable. In some cases, data regarding a given transaction may further include additional data that is not directly part of the transaction appended to transaction data. In some instances, the inclusion of such data in a blockchain may constitute a transaction.

In accordance with an exemplary embodiment, the blockchain 112 provides the seller 122 and the buyer (or purchaser) 132, for example, purchaser company of the GEARS, a way to organize, evaluate updated information, verify, retire, record, and syndicate or trade, the specific land usage rights granted to a purchaser on a specific parcel of land 140 to commercialize, develop, exploit, and make full use and benefit of the greenhouse gases and environmental rights and any subsequently developed greenhouse gases and environmental rights credits associated with the parcel of land 140.

In addition, the GEARS can be different, for example, from Emission Reduction Purchase Agreements (or "ERPAs"), a commonly used purchasing option to contract between a landowner and a project developer for delivery of carbon offset credits as they are issued. For example, an ERPA is a legally binding contract that allows one party to deliver verified carbon credits to another. ERPAs generally involve a government or business in a developing country selling carbon credits to the World Bank's trust funds. Certain conditions govern the exchange and activities, and prices are negotiated before an ERPA is signed, for example, all parties must agree on the volume of GHG emissions to be reduced during the contract period and by what means, the financing amount, and the results metric that triggers payments.

As set forth above, the GEARS is an agreement specific to a parcel of land 140 from which greenhouse gases and environmental rights credits could be developed or exploited from. For example, GEARS are not specific as to the amount of credits, if any, financing, nor how the credits will be developed, nor if processing the rights through a greenhouse gases and environmental rights registry is even required. Noting that in the involuntary carbon credit market, simply the right to develop in the unprocessed or unregistered format are salable albeit at a lesser premium to registered carbon credits. The GEARS^{™} process allows for the monetization of the asset class in a lesser processed format and in accordance with an exemplary embodiment, the purchaser of the GEARS is the recipient of transferable rights to develop greenhouse gases and environmental rights credits on the parcel of land 140. GEARS^{™} involve a complete system of verification, updating, and validating rights on a continuous basis whereas an ERPA is simply a unidimensional legal contract binding two parties and has no technology embedded within its existence. For example, the seller 122 of the GEARS associated with the parcel of land 140 could enter into a contractual lease of the GEARS with the buyer 132. A contractual lease allows the seller 122 to recognize that they possess GEARS associated with the parcel of land 140 and that the seller 122 agrees to transfer the GEARS to the buyer 132. In an exemplary embodiment, the processing server 110 or any other suitable third-party system, e.g., a governmental entity, is utilized as an intermediary entity between the seller 122 and the buyer 132. For example, the intermediary, e.g., the processing server 110, can be a special purpose vehicle (SPV) that receives the GEARS from the seller 122 via a contractual lease. In embodiments where the processing server 110 is the intermediary entity, once the GEARS has been transferred to the processing server 110, the processing server 110 may list the GEARS on the GEARS^{™} portal 114 as discussed above. The initial transfer of the GEARS from the seller 122 to the third-party entity can be executed using a smart contract on a blockchain. For example, the seller 122 may indicate that they wish to list the GEARS associated with the parcel of land 140 on the GEARS^{™} portal 114, e.g., using the GUI 124. An initial blockchain transaction can be recorded on the blockchain that includes one or more blockchain data values identifying at least the seller 122 and the parcel of land 140. Upon verification of the GEARS associated with the parcel of land 140 as discussed above, a smart contract can execute an agreement transferring the GEARS from the seller 122 to an intermediary entity, e.g., the processing server 110. Further, the smart contract can cause the parcel of land 140 to be listed on the GEARS^{™} portal 114 once the agreement between the seller 122 and the intermediary entity, e.g., the processing server 110, has been executed. The agreement between the seller 122 and the intermediary entity can be recorded on the blockchain as a transaction between the seller 122 and the intermediary entity, e.g., the processing server 110. Subsequently, a subsequent purchaser, e.g., the buyer 132, can view the GEARS associated with the parcel of land 140, e.g., via the GEARS^{™} portal 114 and/or GUI 134, and the subsequent purchaser can enter into an agreement with the intermediary entity, e.g., the processing server 110, to obtain the GEARS associated with the parcel of land 140. In an exemplary embodiment, the agreement between the buyer 132 and the intermediary entity, e.g., the processing server 110, is a contractual sublease, e.g., of the contractual lease between the seller 122 and the intermediary entity, of the GEARS associated with the parcel of land 140. Further, the buyer 132, or any holder of the contractual sublease, can further transfer the GEARS to a subsequent holder using a subsequent agreement, such as, but not limited to, a novation of the contractual sublease.

A valuation for the purchaser of GEARS, can represent initially an out-of-the money long term transferable option on ownership and the price of greenhouse gases and environmental rights credits. For example, within the inventory of purchasers there will be those purchasers of the GEARS that will have the immediate ability to develop and value the parcel of land 140 and corresponding greenhouse gases and environmental rights credits. For example, crop land where indigo or mangroves could be planted, land where carbon sequestration technology can be applied, or simply land where solar or alternative renewable projects can be developed, application of a now nascent or uneconomic application of a new technology with the ability to purchase the rights to exploit for future technological innovation (eg. technologies for example that can turn mining tailings into rare compounds, non-economic currently, but the technology would still requires access to mining pools in the not too distant future and this would be an economical and legal way to exploit these rights for a future technological application) , or where cash flow is from the project and where the ability and cost to develop environmental rights credits is secondary to that those development projects.

In addition, it would be desirable to have a system and method that provides access to these opportunities to generate greenhouse gases and environmental rights credits, e.g., a biodiversity rights to exploit the savings of a species be it animal, insect or vegetation in a specific area, and which includes a verification of the GEARS including activities that may affect the parcel of land 140 and any information concerning development or impactful changes in the underlying land of the parcel of land 140. For example, the buyer (or purchaser) 132 of the GEARS can be carried at their book value unless actual development would suffice to change the valuation but would trade based on the prevailing price of greenhouse gases and environmental rights credits, e.g., carbon credits, with a premium more closely associated with the ability or likelihood of development, the ease of development, and if in fact development with a third party developer is in process. The buyer 132 (or purchaser) could purchase the GEARS associated with the on a parcel of land, e.g. the parcel of land 140, that has little or no current usage or is vacant from the landowner (or landowners) for a relatively small amount, and which could be purchased relatively quickly. For example, pricing for the GEARS could be variable with a higher royalty towards a tail end of the contractual rights, for example, the last years, for example, 5 years to 10 years of the GEARS when greenhouse gases and environmental rights credit markets are more fully developed and a more significant return is obtained from the environmental rights credits.

In accordance with an exemplary embodiment, a machine learning algorithm and/or neural network can determine a GEARS^{™} value of the parcel of land 140 based on the metrics of the parcel of land 140 captured by the monitoring system 142. For example, a machine learning algorithm and/or neural network can be trained to determine a GEARS^{™} value for a piece of land, e.g., the parcel of land 140, using datasets that include data for one or more pieces of land, environmental rights credits developed from those one or more pieces of land, and the market value, e.g., sales value, of those developed environmental rights credits. Once a machine learning algorithm and/or neural network is trained to determine a GEARS^{™} value, the captured metrics of the parcel of land 140 can be input into the trained machine learning algorithm and/or neural network, which can output a GEARS^{™} valuation for the parcel of land 140. The GEARS^{™} valuation may be monetary value of the GEARS for the parcel of land 140, e.g., based on market rates of environmental credits, an estimated total of environmental credits likely to be developed for the parcel of land 140, or any other suitable value, etc. The processing server 110 can generate a GEARS^{™} valuation report based on the output of the machine learning algorithm and/or neural networks indicating the GEARS^{™} value. The GEARS^{™} valuation report generated by the processing server 110 from the output of the one or more machine learning algorithms and/or neural networks can be stored on the blockchain with reference to the underlying parcel of land 140 to which it pertains, e.g., as a transaction on the blockchain. Further, the GEARS^{™} valuation report generated by the processing server 110 from the output of the machine learning algorithms and/or neural networks can be displayed to a user, e.g., the seller 122 and/or the buyer 132, on the GEARS^{™} portal 114, e.g., via the GUI 124, 134.

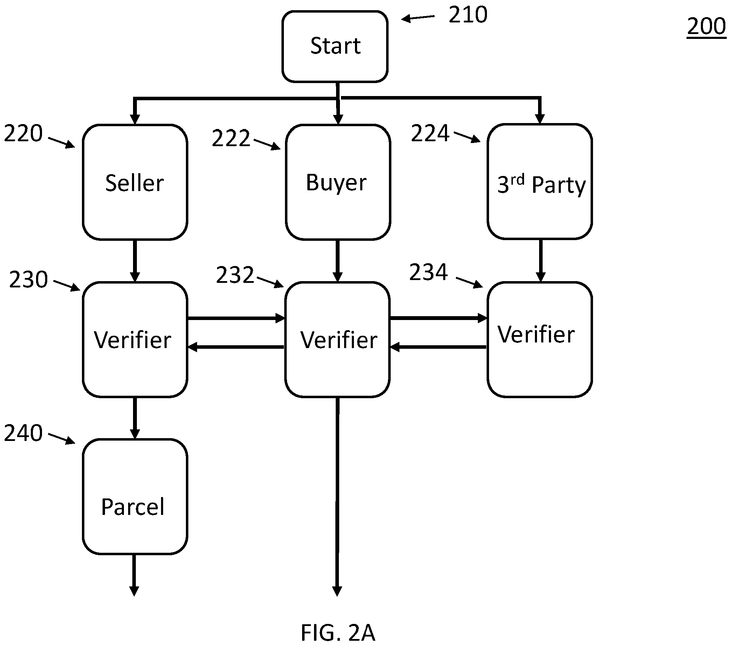

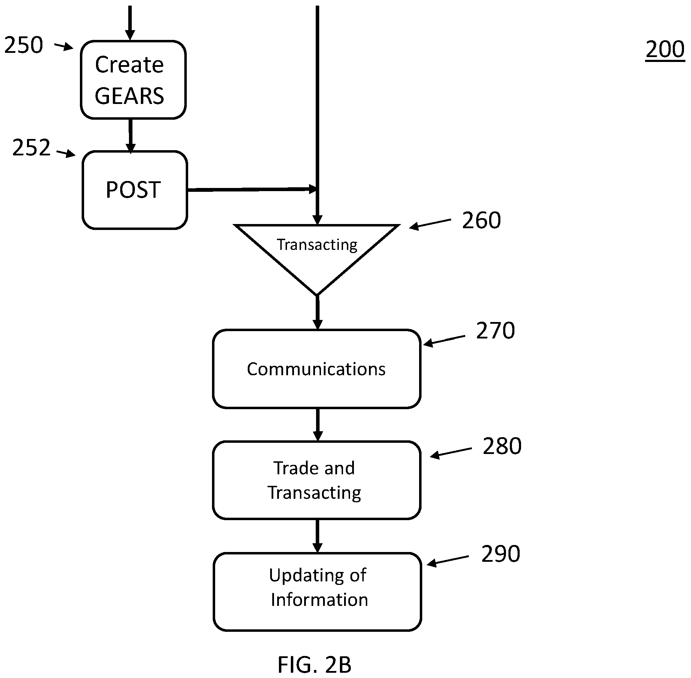

FIGS. 2A and 2B are illustrations of a flowchart of a method 200 for the creation, management and transaction between a purchaser, e.g., the buyer 132, and a seller, e.g., the seller 122, for GEARS in accordance with an exemplary embodiment. As shown in FIGS. 2A and 2B, the process starts in step 210. In step 220, the method and system for creation, management and transaction of GEARS^{™}, can rely on a stream of verified information from the market participants, which can include sellers 220, buyers 222, and third parties 224. The stream of verified information from the market participants allows the GEARS to maintain their value. For example, it would be desirable to have a seamless, decentralized protocol and suite of applications to manage information flows in a way that is highly available and provably secure. For example, a digital identity system can be a collection of open-source libraries and blockchain smart contracts that allows users to create and link private, self-custody digital identities and data stores. In addition, a set of tools and services hosted on a processing server 110 that allow organizations and individuals to leverage the digital identity system in a low-code/no-code environment, and includes a verifier 230, 232, 234, which issues credentials for accessing the GEARS^{™} portal 114. The verifier 230, 232, 234, can provide for identity and access management, a secure file and asset storage system (for example, secure data storage system), signature system for digital agreements (or signature system), and a messenger (or communication system) for secure communications between the sellers 220, buyers 222, and third-parties 224 on the GEARS^{™} portal 114.

In accordance with an exemplary embodiment, the verifier (or verification system) 230, 232, 234 can be a decentralized identity and access management application for digital identity system. The market participants including the seller 220, the buyer 222, and the third-parties 224 (for example, identity owners) can use a combination of email, biometric, and user generated inputs to create a secure link between their natural person and their digital identity on their personal device, for example, a combination of computing system and mobile device. Credentials issued to this identity can be issued using, for example, World Wide Web Consortium (W3C) standards, which can be stored in the verifier's 230, 232, 234 credential wallet and authorizes access to integrated services, e.g., the GEARS portal 114. In accordance with an exemplary embodiment, the verifier 230, 232, 234 can use secure enclaves to ensure that only the natural person to whom the identity belongs can sign transactions and attestations, making the verifier 230, 232, 234, a relatively ultra-secure gateway to the rest of the integrated services provided by the processing server 110, e.g., the GEARS portal 114. The verification of the sellers, buyers, and the third party 220, 222, 224 using the verifier 230, 232, 234 can be the first step in the process and can being used by the sellers, buyers and third-parties 220, 222, 224 in order for the user to create and maintain identity and access to the GEARS portal 114.

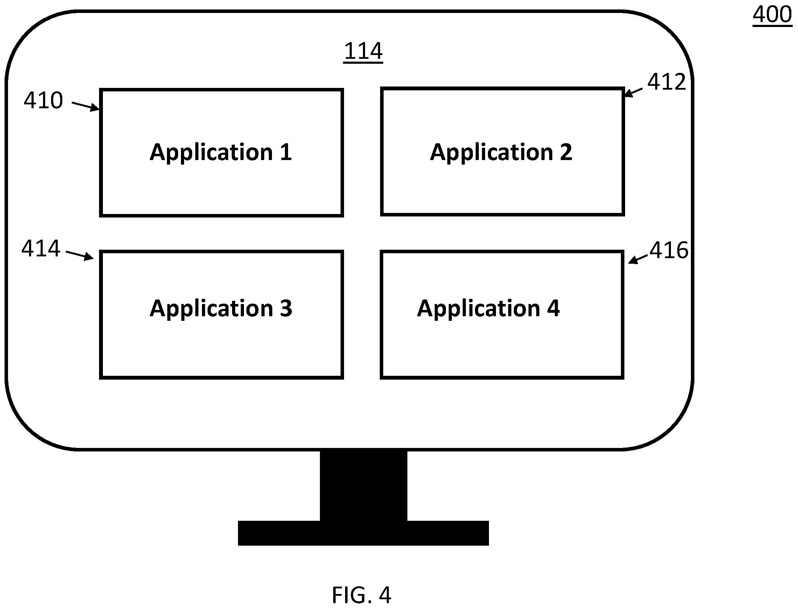

In accordance with an exemplary embodiment, each of the parties in the GEARS system 100 would need to sign up for access to the GEARS^{™} portal 114 via the verifier 230, 232, 234, which provides access to a console of modular applications 410, 412, 414, 416 (FIG. 4) of the GEARS^{™} portal 114 that is hosted on the processing server 110. In accordance with an exemplary embodiment, the processing server 110 can be a cloud server. The modular applications 410, 412, 414, 416 can facilitate relatively secure and efficient transactions by providing institutional grade tools for managing user accounts, sharing data and executing transactions. In accordance with an exemplary embodiment, the system 100 can provide an identity and access management suite that focuses on user control (or verification), secure data storage, high security digital asset and data storage, and digital contract management (sign). The management suite, for example, can include modular components that can identity and access the management suite, for example, via the identity and access management system (or verifier application 230, 232, 234), which can be relatively easy to use with an identity management application, for example, based on an Android platform or iOS, for example, for an iPhone. The verifier application 230, 232, 234 can act as a control center empowering GEARS^{™} participants 220, 222, 224 with self-managed, institutional-grade identity and access management tools, which are critical to recognize the transaction cost savings achieved by concurrently lowering data compliance and security costs (through precision identity and access management) and lowering verification costs (by leveraging permissioned access to verifiable credentials).

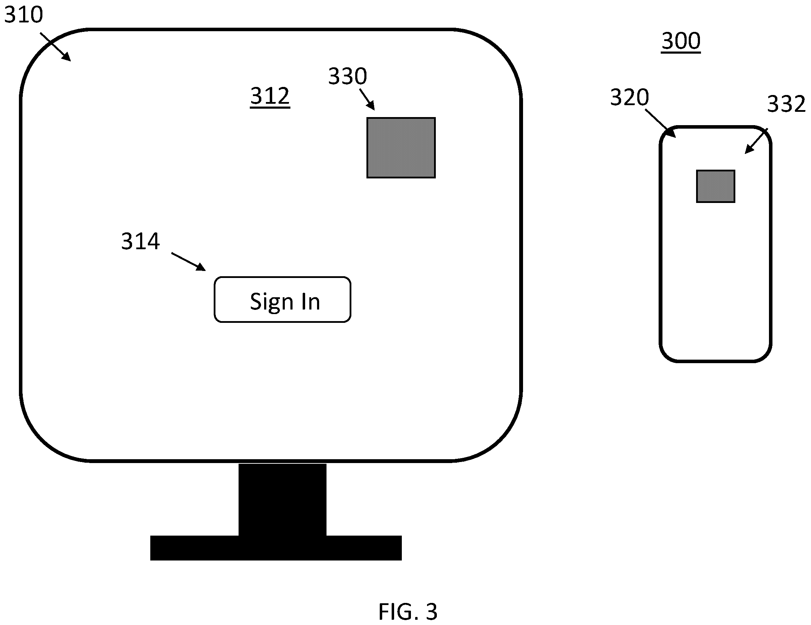

In accordance with an exemplary embodiment, as shown in FIGS. 3-5, the verifier application 230, 232, 234 can leverage a secure enclave of a mobile device 320 to create a self-managed identity management and access system, that is relatively flexible, highly available and verifiably secure, for example, from attack, from example, device hacks. For example, the verifier application 230, 232, 234, can include an account management module in which users can create and manage identities and aliases. For example, a user or market participant in the form of a seller, buyer or third party 220, 222, 224 can have multiple aliases/identities that are tied to a single account, enabling both anonymity and accountability. The system 100 can also include an authentication module in which users 220, 222, 224 can manage passwords and private keys, and multi- factor authentication. In addition, the authorization module allows users 220, 222 to precisely manage third party 224 access to their identity and other data on a time-specific basis. For example, this precision access management can increase security for users 220, 222, 224 and can reduce transaction costs emanating from data compliance and data security costs from centralized proprietary databases. Examples of identity and related data include information such as birth date, passport details, licenses, certifications and other credentials that are stored in the verifier 230, 232, 234, and the secure data storage system which can act as a highly secure digital asset and data storage system. In addition, the identity and related information and corresponding approvals for transaction of the GEARS can include a blockchain based delegation smart contract with complete trust delegates and enforces access to the approved data for an approved (or set) amount of time.

In accordance with an exemplary embodiment, the verifier 230, 232,234 can also include one or more verifier roles, which can include: (1) minter - mints and administers the GEARS^{™} (2) seller - original seller of the GEARS^{™}; (3) buyer - party buying the GEARS^{™} in a transaction; (4) holder - current holder of the GEARS; (5) third parties - ecosystem partners required to provide input information and/or attest to information; and (6) striker - party striking the GEARS^{™} option. In accordance with an exemplary embodiment, the verifier activity can verify each of the market participants so that the market participants can interact with one another, e.g., via the GEARS^{™} portal 114. Thus, the verifier acts as the control center for the console, allowing users to receive and respond to push notifications for required actions including messages, data sharing approvals, and document/transaction signing.

The parcel of land 240 can include details for an area (for example, a parcel of land 140) covered by the GEARS^{™} portal 114. For example, the data bank can include supporting documentation that can be compiled, verified and timestamped, with a proof committed to an accessible public blockchain, e.g., the blockchain network 112. The data bank can also include the metrics of the parcel of land 140 as discussed above, e.g., area precipitation, area temperature, climate changes, air quality changes, changes in land use/morphability, area permitting, area contractual, area registration, area zoning ownership, changes affecting area covered by the GEARS, attestation, and assurance documents, etc.

In addition, the management suite can create the GEARS using a set of tools and services that allow organizations and individuals to leverage the verifier 230, 232, 234 in a low-code/no-code environment, and is comprised of the verifier 230, 232, 234 for identity and access management, a secure data storage system for secure file and asset storage, digital signature module for signing digital agreements, and the communication system or messenger for secure communication.

In accordance with an exemplary embodiment, the secure data storage system in combination with the verifier 230, 232, 234, for example, to create private, secure cloud storage. For example, the owner of a "drive" within the secure data storage system can authorize access to their data, and all third parties, including data hosts and digital service providers, must request file access from that owner to see the data. For example, drive data can be stored using a decentralized infrastructure where every operation and event, including access requests, reads, and writes, are permanently logged, eliminating the risk that any third party corporate or state actor could secretly access or destroy data from the drive of an owner.

In accordance with an exemplary embodiment, activity within the drive can include that each of parties uploading relevant data to the drive. For example, through this method all data remains in the possession of the party. For example, the minter would request copies of all relevant documentation and access to the documentation would be shared with the minter and any relevant third party in an attestation or assurance role.

In accordance with an exemplary embodiment, the secure data storage system can also include a "vault", which can leverage an additional layer of protocols to secure the most sensitive data a user wishes to retain including digital assets, private keys, and passwords. The multi-signature capability of the vault allows organizations to build and follow bespoke governance protocols to suit the needs of the governance protocols when validating data and transferring assets.

In accordance with an exemplary embodiment, the vault can be amulti-cloud financial-data storage using encrypted content-addressing distributed file systems. For example, a digital-contract custody and digital bearer instrument creation and secure storage. In addition, the vault can be a highly secure data storage leveraging distributed ledger technology, requiring multi-signature authentication for any actions. The vault can be designed for security sensitive use cases such as digital-contract custody and digital bearer instrument storage.

In accordance with an exemplary embodiment, the digital signature module (or "sign") for signing digital agreements can bring the capabilities of verifier application 230, 232, 234 to the execution and storage of legal documents. For example, with sign, parties can generate or upload legally binding agreements that are enforceable in a court of law, use verifier 230, 232, 234 to sign their agreements, and then securely store their agreements in their respective drive or vault, keeping their agreement terms confidential from digital service providers. In addition to privacy, sign can create a powerful bridge between legal agreements and digital assets, providing a secure link between tokens and the world of real value. The sign module and corresponding software can be used by sellers 220, in the creation of GEARS as well as buyers 222 and third parties 224 in the corresponding transactions between the market participants, e.g., via the GEARS^{™} portal 114.

In accordance with an exemplary embodiment, the workflow/sign activity (or POST) 252 can include once the parcel of land 140 has been verified by the required signatures in the workflow/sign module, a hash/derivative/compilation of this documentation can be minted into, for example, a digital token such as, but not limited to, a non-fungible token (NFT), or any other suitable digital token that represents the GEARS. In an embodiment, the digital token can include the GEARS valuation determined by a machine learning algorithm and/or a neural network as discussed above The GEARS digital asset can then be pushed to the vault for relatively highly secure storage. Once verified by the required signatures in the workflow/sign module, a hash/derivative/compilation of this documentation is minted into a digital token, e.g., an NFT, representing the updated GEARS upon an execution of a transaction of the GEARS between the seller 220 and the buyer 222 in a transaction 260.

In accordance with an exemplary embodiment, the updated/new GEARS digital asset is then pushed to the vault for highly secure storage. For example, the seller 220 can be pinged (or requested) to update the corresponding documents in sign with the minter. Once verified by the required signatures in the workflow/sign module, a hash/derivative/compilation of this documentation is minted into a new digital token, e.g., an NFT, representing the record of the past GEARS, for example, to prevent future double spending or use of the rights. In accordance with an exemplary embodiment, the digital token will be programmed to last until the exercised current rights expire. For example, the updated/new rights digital asset can be pushed to the vault of a striker (or buyer) of the GEARS. While the previous GEARS, for example, can be retired by being sent to a one-way "burner" vault setup by the minter. The seller 220 can then be pinged or requested to update the document in sign with the minter, for example, as a condition for transaction execution and/or transfer of funds.

In accordance with an exemplary embodiment, the workflow for the creation of the GEARS can be a SSID-enabled (Service Set Identifier-enabled) electronic document and smart contract signing. The management suite can also include a productivity tool suite and integrations for automating and securely signing documents with an immutable timestamp for proof of existence including secure creation, templating, routing, and signing of documents with an immutable timestamp for proof of existence.

In accordance with an exemplary embodiment, the communication system (or communication messenger) 270 can be a chat, voice, and video communications tool. For example, communications can be fully encrypted end-to-end and securely stored in a drive or vault. Data owners can choose to keep these records fully private or can rather easily attach them to legal agreements, transaction records, and digital assets for ease in managing audit and regulatory requirements. Users and organizations, for example, can get all the benefits ofa Cloud-based digital service while eliminating the inherent counterparty risk of revealing sensitive data to a digital service provider.

In accordance with an exemplary embodiment, the communication messenger activity can include relevant users interacting at relevant times using the messenger application. For example, scheduled messages can be used in concert with workflow/sign to collect attestations or request updated documentation from the seller 220 and third parties 224.

In accordance with an exemplary embodiment, trading and transacting 280 of the GEARS^{™} can include a digital order book can also be provided for matching, settlement, or the formal process of transferring title and custody. For example, the digital order book can be recorded in the blockchain 112.

In addition, initially, the updating of information 290, for example on the parcel of land 140 or GEARS^{™} created to represent that specific right to exploit, it can be done at set intervals and in regard to some data, for example, the updating of information could be done annually at a minimum with the source of the information, which can include updates of area precipitation, area temperature, area land use and morphability, area permitting, area contractual, area registration, area zoning ownership, changes affecting area covered by the GEARS, attestation/assurance documents, etc. For example, the set intervals can be weekly, monthly, and/or yearly. In accordance with an exemplary embodiment, the final stage of an update can involve the verification of the updated information, and once the information has been verified as discussed above, the data is added to the GEARS^{™} data bank.

FIG. 3 is an illustration of a graphical user interface (GUI) 312 of a computing device 310 and a mobile device 320 for verifying a market participant in accordance with an exemplary embodiment. As shown in FIG. 3, the market participant, for example, a seller 220, a buyer 222, and/or a third party 224 can access a bilateral trading portal (or exchange portal), e.g., the GEARS^{™} portal 114, hosted on the processing server 110 by retrieving the "sign in" page 314 of the trading portal, e.g., the GEARS portal 114. On the "Sign In" (or sign in) page 314, the market participant can retrieve a code 330, for example, a matrix code or two-dimensional code (e.g. QR code) displayed on the sign in page 314 with a smart device, for example, mobile device or smartphone 320. For example, the code 330 as shown on the sign in page 314 of the graphical user interface 312 can be scanned with the smart device, and if the market participant is authorized, the market participant can be automatically logged into the GEARS^{™} portal 114through, for example, a combination of email, biometric, and user generated inputs and security features on the mobile device or smartphone 320 to create a secure link between the market participant and their digital identity on their mobile device or smartphone 320 based on the retrieved code 330.

As set forth above, credentials issued to this identity or market participant 220, 222, 224 can be issued using, for example, World Wide Web Consortium (W3C) standards, which can be stored in a credential wallet of the verifier 230, 232, 234 credential wallet and authorizes access to integrated services. In accordance with an exemplary embodiment, the verifier 230, 232, 234 can use secure enclaves to ensure that only the natural person to whom the identity belongs can sign transactions and attestations, making the verifier 230, 232, 234, a relatively ultra-secure gateway to the rest of the integrated services provided by the processing server 110. The verification of the sellers, buyers, and the third party 220, 222, 224 using the verifier 230, 232, 234 can be the first step in the process and is being used by the sellers, buyers and third party 220, 222, 224 in order for the user to create and maintain identity and access.

In accordance with an exemplary embodiment, once the market participant 220, 222, 224 has been granted access to the GEARS^{™} portal 114 each of the market participants, for example, in the GEARS^{™} system would be able to access via the verifier 230, 232, 234, a plurality of applications 410, 412, 414, 416 as shown in FIG. 4 that facilitates secure and efficient transactions by providing institutional grade tools for managing user accounts, sharing data, and executing transactions associated with the buying and selling of GEARS^{™} as disclosed above. The one more applications 410, 412, 414, 416 can provide, for example, strategies for bilateral trades, exchange for related positions, trades, block trades, and tools to calculate and offset greenhouse gases (GHGs). In addition, the one or more applications 410, 412, 414, 416 can include tools for buyers and sellers to calculate carbon content, buyers and sellers can calculate the environmental impact of their projects and bundle the correct number of carbon offsets with their buying and selling of GEARS^{™} on the GEARS portal 114.

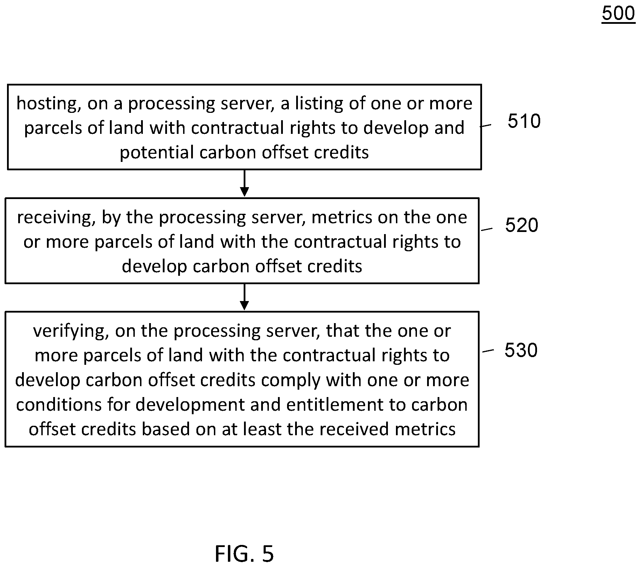

FIG. 5 is a flowchart illustrating a method for bilateral transfers of GEARS^{™} 500 in accordance withan exemplary embodiment. As shown in FIG. 5, in step 510, a listing of one or more parcels of land, e.g., the parcel of land 140, with contractual rights to develop greenhouse gases and environmental rights credits is hosted on a processing server, e.g., the processing server 110. In step 520, metrics on the one or more parcels of land 140 with the contractual rights to develop greenhouse gases and environmental rights credits are received on the processing server 110. In step 530, the one or more parcels of land 140 with the contractual rights to develop greenhouse gases and environmental rights credits are verified to comply with one or more conditions for acceptance as GEARS^{™} and with a reference to the protocols for development and potential entitlement to environmental rights credits based on at least the received metrics on the processing server 110.

In accordance with an exemplary embodiment, the method further includes documenting, on the processing server, publicly disseminated information on the one or more parcels of land 140, or GEAR created to represent that specific right to exploit, with the contractual rights to develop greenhouse gases and environmental rights credits; and documenting, on the processing server 110, one or more of permitting, contractual, registration, zoning, and ownership of the one or more parcels of land 140 with the contractual rights to develop greenhouse gases and environmental rights credits. In addition, the metrics of the one or more parcels of land 140 with the contractual rights to develop greenhouse gases and environmental rights credits can be received from the monitoring system 142, e.g., an imaging system. For example, the imaging system can receive an image of the one or more parcels of land 140 from one or more of a photo sensor, a satellite, an airplane, a drone, and a balloon.

In accordance with an exemplary embodiment, the method includes receiving, by the processing server 110, the metrics of the one or more parcels of land 140, or GEAR created to represent that specific right to exploit, and the contractual rights to develop greenhouse gases and environmental rights credits from a smart sensing technology, the metrics received from the smart sensing technology including one or more of area precipitation, area temperature, and changes in land usage or morphability. The metrics of the one or more parcels of land 140 with the contractual rights to develop greenhouse gases and environmental rights credits, for example, can be recorded on a blockchain associated with the processing server 110.

In accordance with an exemplary embodiment, the publicly disseminated information on the one or more parcels of land 140 with the contractual rights to develop greenhouse gases and environmental rights credits, and the one or more of permitting, contractual, registration, zoning, and ownership of the one or more parcels of land 140 with the contractual rights to develop greenhouse gases and environmental rights credits can be recorded on a blockchain associated with the processing server 110. In addition, the method can include providing, on the processing server 110, a status of the one or more parcels of land 140 with the contractual rights to develop greenhouse gases and environmental rights credits, the status including ownership of the one or more parcels of land 140 with the contractual rights to develop greenhouse gases and environmental rights credits, ownership of a contractual right to develop greenhouse gases and environmental rights credits of the one or more parcels of land 140 with the contractual rights to develop greenhouse gases and environmental rights credits, and a status of the contractual right to develop the greenhouse gases and environmental rights credits of the one or more parcels of land 140 with the contractual rights to develop greenhouse gases and environmental rights credits.

In accordance with an exemplary embodiment, the method includes registering, on the processing server 110, a plurality of market participants, the plurality of market participants participating in one or more of a sale, a purchase, or a third-party activity in a development of greenhouse gases and environmental rights credits, e.g. GEARS, of the one or more parcels of land 140 with the contractual rights to develop greenhouse gases and environmental rights credits being hosted by the processing server 110; and granting, by the processing server 110, one or more of the plurality of market participants access to data on a bilateral exchange portal, e.g., the GEARS^{™} portal 114, for the sale, the purchase, or the third-party activity in the development of the greenhouse gases and environmental rights credits for the one or more parcels of land 140 with the contractual rights to develop greenhouse gases and environmental rights credits. In addition, the granting of the access to the bilateral exchange portal, e.g., the GEARS^{™} portal 114, can further include granting, by the processing server 110, access to the bilateral exchange portal, e.g., the GEARS^{™} portal 114, by the one or more market participants via a digital identity system, the digital identify system including a QR code on a sign in page of the bilateral exchange portal, e.g., the GEARS^{™} portal 114, in combination with a biometric validation of the QR with a smartphone.

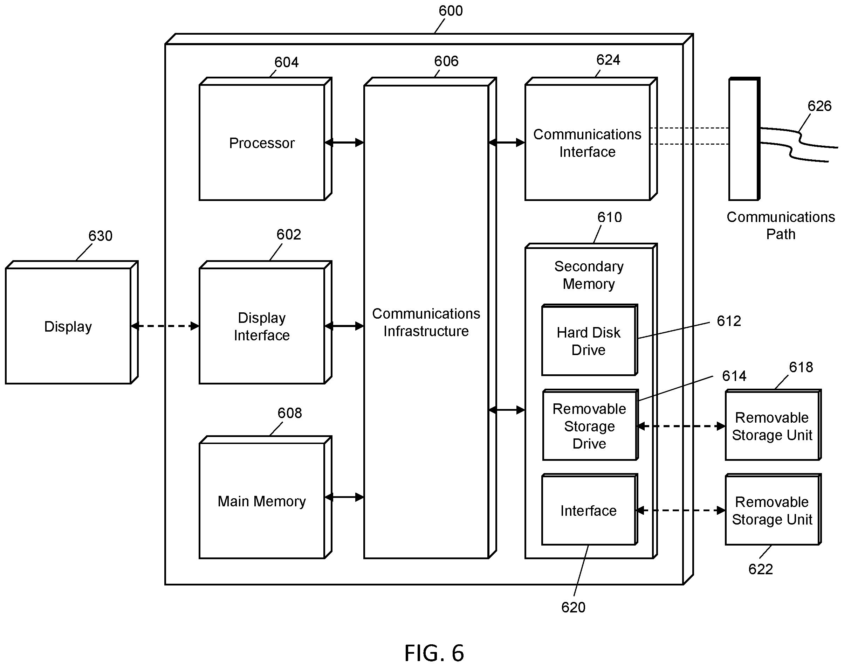

FIG. 6 illustrates a representative computer system 600 in which embodiments of the present disclosure, or portions thereof, may be implemented as computer-readable code executed on hardware. Forexample, the method and system for bilateral trades of greenhouse gases and environmental rights as disclosed herein may be implemented in whole or in part by a computer system 600 using hardware, software executed on hardware, firmware, non-transitory computer readable media having instructions stored thereon, or a combination thereof and may be implemented in one or more computer systems or other processing systems. Hardware, software executed on hardware, or any combination thereof may embody modules and components used to implement the methods and steps of the presently described method and system.

If programmable logic is used, such logic may execute on a commercially available processing platform configured by executable software code to become a specific purpose computer or a special purpose device (for example, programmable logic array, application-specific integrated circuit, etc.). A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above-described embodiments.

A processor unit or device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 618, a removable storage unit 622, and a hard disk installed in hard disk drive 612.

Various embodiments of the present disclosure are described in terms of this representative computer system 600. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the spirit of the disclosed subject matter.

A processor device 604 may be processor device specifically configured to perform the functions discussed herein. The processor device 604 may be connected to a communications infrastructure 606, such as a bus, message queue, network, multi-core message-passing scheme, etc. The network may be any network suitable for performing the functions as disclosed herein and may include a local area network ("LAN"), a wide area network ("WAN"), a wireless network (e.g., "Wi-Fi"), a mobile communication network, a satellite network, the Internet, fiber optic, coaxial cable, infrared, radio frequency ("RF"), or any combination thereof. Other suitable network types and configurations will be apparent to persons having skill in the relevant art. The computer system 600 may also include a main memory 608 (e.g., random access memory, read-only memory, etc.), and may also include a secondary memory 610. The secondary memory 610 may include the hard disk drive 612 and a removable storage drive 614, such as a floppy disk drive, a magnetic tape drive, an optical disk drive, a flash memory, etc.

The removable storage drive 614 may read from and/or write to the removable storage unit 618 in a well-known manner. The removable storage unit 618 may include a removable storage media that may be read by and written to by the removable storage drive 614. For example, if the removable storage drive 614 is a floppy disk drive or universal serial bus port, the removable storage unit 618 may be a floppy disk or portable flash drive, respectively. In one embodiment, the removable storage unit 618 may be non-transitory computer readable recording media.

In some embodiments, the secondary memory 610 may include alternative means for allowing computer programs or other instructions to be loaded into the computer system 600, for example, the removable storage unit 622 and an interface 620. Examples of such means may include a program cartridge and cartridge interface (e.g., as found in video game systems), a removable memory chip (e.g., EEPROM, PROM, etc.) and associated socket, and other removable storage units 622 and interfaces 620 as will be apparentto persons having skill in the relevant art.

Data stored in the computer system 600 (e.g., in the main memory 608 and/or the secondary memory 610) may be stored on any type of suitable computer readable media, such as optical storage (e.g., a compact disc, digital versatile disc, Blu-ray disc, etc.) or magnetic storage (e.g., a hard diskdrive). The data may be configured in any type of suitable database configuration, such as a relational database, a structured query language (SQL) database, a distributed database, an object database, etc. Suitable configurations and storage types will be apparent to persons having skill in the relevant art.

The computer system 600 may also include a communications interface 624. The communications interface 624 may be configured to allow software and data to be transferred between the computer system 600 and external devices. Exemplary communications interfaces 624 may include a modem, a network interface (e.g., an Ethernet card), a communications port, a PCMCIA slot and card, etc. Software and data transferred via the communications interface 624 may be in the form of signals, which may be electronic, electromagnetic, optical, or other signals as will be apparent to persons having skill in the relevant art. The signals may travel via a communications path 626, which may be configured to carry the signals and may be implemented using wire, cable, fiber optics, a phone line, a cellular phone link, a radio frequency link, etc.

The computer system 600 may further include a display interface 602. The display interface 602 may be configured to allow data to be transferred between the computer system 600 and external display 630. Exemplary display interfaces 602 may include high-definition multimedia interface (HDMI), digital visual interface (DVI), video graphics array (VGA), etc. The display 630 may be any suitable type of display for displaying data transmitted via the display interface 602 of the computer system 600, including a cathode ray tube (CRT) display, liquid crystal display (LCD), light-emitting diode (LED) display, capacitive touch display, thin-film transistor (TFT) display, etc. Computer program medium and computer usable medium may refer to memories, such as the main memory 608 and secondary memory 610, which may be memory semiconductors (e.g., DRAMs, etc.). These computer program products may be means for providing software to the computer system 600. Computer programs (e.g., computer control logic) may be stored in the main memory 608 and/or the secondary memory 610. Computer programs may also be received via the communications interface 624. Such computer programs, when executed, may enable computer system 600 to implement the present methods as discussed herein. In particular, the computer programs, when executed, may enable processor device 604 to implement the methods illustrated by FIGS. 1-5, as discussed herein. Accordingly, such computer programs may represent controllers of the computer system 600. Where the present disclosure is implemented using software executed on hardware, the software may be stored in a computer program product and loaded into the computer system 600 using the removable storage drive 614, interface 620, and hard disk drive 612, or communications interface 624.

The processor device 604 may comprise one or more modules or engines configured to perform the functions of the computer system 600. Each of the modules or engines may be implemented using hardware and, in some instances, may also utilize software executed on hardware, such as corresponding to program code and/or programs stored in the main memory 608 or secondary memory 610. In such instances, program code may be compiled by the processor device 604 (e.g., by a compiling module or engine) priorto execution by the hardware of the computer system 600. For example, the program code may be source code written in a programming language that is translated into a lower level language, such as assembly language or machine code, for execution by the processor device 604 and/or any additional hardware components of the computer system 600. The process of compiling may include the use of lexical analysis, preprocessing, parsing, semantic analysis, syntax- directed translation, code generation, code optimization, and any other techniques that may be suitable for translation of program code into a lower level language suitable for controlling the computer system 600 to perform the functions disclosed herein. It will be apparent to persons having skill in the relevant art that such processes result in the computer system 600 being a specially configured computer system 600 uniquely programmed to perform the functions discussed above.

Techniques consistent with the present disclosure provide, among other features, method and system for bilateral trades of greenhouse gases and environmental rights. While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the breadth or scope.

## Claims

1. A computer-implemented method for creation, management and transaction ofgreenhouse gases and environmental rights, the method comprising:
hosting, on a processing server, a listing of one or more parcels of land with contractual rights to develop greenhouse gases and environmental rights credits;
receiving, by the processing server, metrics on the one or more parcels of land with the contractual rights to develop greenhouse gases and environmental rights credits; and
verifying, on the processing server, that the one or more parcels of land with the contractual rights to develop greenhouse gases and environmental rights credits comply with one or more conditions for development and potential entitlement to greenhouse gases and environmental rights credits based on at least the received metrics.

2. The computer-implemented method according to claim 1, further comprising:
receiving, by the processing server, the metrics of the one or more parcels of land with the contractual rights to develop greenhouse gases and environmental rights credits from an imaging system, the imaging system receiving images from one or more of a photo sensor, a satellite, an airplane, a drone, a balloon, a boat, a submarine, and/or a land vehicle.

3. The computer-implemented method according to claim 2, further comprising:
training, by the processing server, a machine learning algorithm and/or a neural network for determining an amount of one or more greenhouse gases being taken out of the atmosphere by a piece of land, the training of the machine learning algorithm and/or a neural network including:
inputting, by the processing server, one or more datasets into the machine learning algorithm and/or a neural network, the one or more datasets including a known amount of one or more greenhouse gases taken out of the atmosphere by one or more pieces of land;
generating, by the processing server, a trained machine learning algorithm and/or a neural network for determining an amount of one or more greenhouse gases being taken out of the atmosphere by a piece of land;
inputting, by the processing server, the metrics of the one or more parcels of land into the trained machine learning algorithm and/or a neural network;
receiving, by the processing server, an output from the trained machine learning algorithm and/or a neural network, the output including an amount of one or more greenhouse gases being taken out of the atmosphere by the one or more parcels of land;
and
generating, by the processing server, a report of the one or more parcels of land, the report including the amount of one or more greenhouse gases being taken out of the atmosphere by the one or more parcels of land.

4. The computer-implemented method according to claim 2 or 3, further comprising:
training, by the processing server, a machine learning algorithm and/or a neural network for analyzing the metrics of the one or more parcels of land,
the training of the machine learning algorithm and/or a neural network including:
inputting, by the processing server, one or more datasets into the machine learning algorithm and/or a neural network, the one or more datasets including one or more pieces of land and data associated with each of the one or more pieces of land, the data associated with each of the one or more pieces of land including at least one of land usage, land topography, vegetation, and climate;
generating, by the processing server, a trained machine learning algorithm and/or a neural network for analyzing the metrics of the one or more parcels of land;
inputting, by the processing server, the metrics of the one or more parcels of land into the trained machine learning algorithm and/or a neural network;
receiving, by the processing server, an output from the trained machine learning algorithm and/or a neural network, the output including at least one of land usage, land topography, vegetation, and climate of the one or more parcels of land; and
generating, by the processing server, a report of the one or more parcels of land, the report including at least one of the land usage, land topography, vegetation, and climate of the one or more parcels of land.

5. The computer-implemented method according to claim 2, 3 or 4, further comprising:
training, by the processing server, a machine learning algorithm and/or a neural network for determining a valuation of the contractual rights to develop greenhouse gases and environmental rights associated with each of the one or more parcels of land, the training of the machine learning algorithm and/or a neural network including:
inputting, by the processing server, one or more datasets into the machine learning algorithm and/or a neural network, the one or more datasets including data for one or more pieces of land, environmental rights credits developed from the one or more pieces of land, and the market value, of the developed environmental rights credits;
generating, by the processing server, a trained machine learning algorithm and/or a neural network for determining a valuation of the contractual rights to develop greenhouse gases and environmental rights associated with each of the one or more parcels of land;
inputting, by the processing server, the metrics of the one or more parcels of land into the trained machine learning algorithm and/or a neural network;
receiving, by the processing server, an output from the trained machine learning algorithm and/or a neural network, the output including a valuation of the contractual rights to develop greenhouse gases and environmental rights associated with each of the one or more parcels of land; and
generating, by the processing server, a report of the one or more parcels of land, the report including the valuation of the contractual rights to develop greenhouse gases and environmental rights associated with each of the one or more parcels of land.

6. The computer-implemented method according to claim 5, wherein the valuation of the contractual rights to develop greenhouse gases and environmental rights associated with each of the one or more parcels of land is one of a monetary value of the contractual rights for each of the one or more parcels of land, or an estimated total of greenhouse gases and environmental rights credits likely to be developed for each of the one or more parcels of land.

7. The computer-implemented method according to one of the preceding claims, further comprising:
recording, on a blockchain associated with the processing server, the metrics of the one or more parcels of land with the contractual rights to develop greenhouse gases and environmental rights credits.

8. The computer-implemented method according to any one of the preceding claims, further comprising:
registering, on the processing server, a plurality of market participants, the plurality of market participants participating in one or more of a sale, a purchase, or a third-party activity in a development of greenhouse gases and environmental rights credits of the one or more parcels of land with the contractual rights to develop greenhouse gases and environmental rights credits being hosted by the processing server; and
granting, by the processing server, one or more of the plurality of market participants access to data on a portal for the sale, the purchase, or the third-party activity in the development of the greenhouse gases and environmental rights credits for the one or more parcels of land with the contractual rights to develop greenhouse gases and environmental rights credits.

9. The computer-implemented method according to any one of the preceding claims, further comprises:
presenting, by the processing server, the listing of the one or more parcels of land with contractual rights to develop greenhouse gases and environmental rights credits via graphical user interface (GUI), the GUI enabling one or more market participants to participate in one or more of a sale, a purchase, or a third-party activity in a development of the greenhouse gases and environmental rights credits of the one or more parcels of land with the contractual rights to develop greenhouse gases and environmental rights credits being hosted by the processing server.

10. The computer-implemented method according to any one of the preceding claims, wherein the hosting a listing of the one or more parcels of land with contractual rights to develop greenhouse gases and environmental rights credits includes:
receiving, by the processing server, a request to list a parcel of land of the one or more parcels of land with contractual rights to develop greenhouse gases and environmental rights credits; and
the computer-implemented method further comprises:
in response to the verifying that the parcel of land of the one or more parcels of land complies with the one or more conditions for development and potential entitlement to greenhouse gases and environmental rights credits based on at least the received metrics, executing, by the processing server using a smart contract, a transfer of the contractual rights to develop greenhouse gases and environmental rights credits for the parcel of land of the one or more parcels of land from a seller to an intermediary entity.

11. A system for creation, management and transaction ofgreenhouse gases and environmental rights, the system comprising:
a processing server configured to:
host a listing of one or more parcels of land with contractual rights to develop carbon offset credits;
receive metrics on the one or more parcels of land with the contractual rights to develop greenhouse gases and environmental rights credits; and
verify that the one or more parcels of land with the contractual rights to develop greenhouse gases and environmental rights credits comply with one or more conditions for development and potential entitlement to greenhouse gases and environmental rights credits based on at least the received metrics.

12. The system according to claim 11, wherein the processing server is further configured to:
receive the metrics of the one or more parcels of land with the contractual rights to develop greenhouse gases and environmental rights credits from an imaging system, the imaging system receiving images from one or more of a photo sensor, a satellite, an airplane, a drone, a balloon, a boat, a submarine, and/or a land vehicle.

13. The system according to claim 12, wherein the processing server is further configured to:
train a machine learning algorithm and/or a neural network for determining an amount of one or more greenhouse gases being taken out of the atmosphere by a piece of land, the training of the machine learning algorithm and/or a neural network including:
inputting one or more datasets into the machine learning algorithm and/or a neural network, the one or more datasets including a known amount of one or more greenhouse gases taken out of the atmosphere by one or more pieces of land;
generating a trained machine learning algorithm and/or a neural network for determining an amount of one or more greenhouse gases being taken out of the atmosphere by a piece of land;
input the metrics of the one or more parcels of land into the trained machine learning algorithm and/or a neural network;
receive an output from the trained machine learning algorithm and/or a neural network, the output including an amount of one or more greenhouse gases being taken out of the atmosphere by the one or more parcels of land; and
generate a report of the one or more parcels of land, the report including the amount of one or more greenhouse gases being taken out of the atmosphere by the one or more parcels of land.

14. The system according to claim 12 or 13, wherein the processing server is further configured to:
train a machine learning algorithm and/or a neural network for analyzing the metrics of the one or more parcels of land, the training of the machine learning algorithm and/or a neural network including:
inputting one or more datasets into the machine learning algorithm and/or a neural network, the one or more datasets including one or more pieces of land and data associated with each of the one or more pieces of land, the data associated with each of the one or more pieces of land including at least one of land usage, land topography, vegetation, and climate;
generating a trained machine learning algorithm and/or a neural network for analyzing the metrics of the one or more parcels of land;
input the metrics of the one or more parcels of land into the trained machine learning algorithm and/or a neural network;
receive an output from the trained machine learning algorithm and/or a neural network, the output including at least one of land usage, land topography, vegetation, and climate of the one or more parcels of land; and
generate a report of the one or more parcels of land, the report including at least one of the land usage, land topography, vegetation, and climate of the one or more parcels of land.

15. The system according to claim 12, 13 or 14, wherein the processing server is further configured to:
train a machine learning algorithm and/or a neural network for determining a valuation of the contractual rights to develop greenhouse gases and environmental rights associated with each of the one or more parcels of land, the training of the machine learning algorithm and/or a neural network including:
inputting one or more datasets into the machine learning algorithm and/or a neural network, the one or more datasets including data for one or more pieces of land, environmental rights credits developed from the one or more pieces of land, and the market value, of the developed environmental rights credits;
generating a trained machine learning algorithm and/or a neural network for determining a valuation of the contractual rights to develop greenhouse gases and environmental rights associated with each of the one or more parcels of land;
input the metrics of the one or more parcels of land into the trained machine learning algorithm and/or a neural network;
receive an output from the trained machine learning algorithm and/or a neural network, the output including a valuation of the contractual rights to develop greenhouse gases and environmental rights associated with each of the one or more parcels of land; and
generate a report of the one or more parcels of land, the report including the valuation of the contractual rights to develop greenhouse gases and environmental rights associated with each of the one or more parcels of land.

16. A non-transitory computer readable medium storing computer readable program code that, when executed by a processor, causes the processor to provide an exchange for creation, management and transaction of greenhouse gases and environmental rights, the program code comprising instructions for:
hosting a listing of one or more parcels of land with contractual rights to develop greenhouse gases and environmental rights credits;
receiving metrics on the one or more parcels of land with the contractual rights to develop greenhouse gases and environmental rights credits; and
verifying that the one or more parcels of land with the contractual rights to develop greenhouse gases and environmental rights credits comply with one or more conditions for development and potential entitlement to greenhouse gases and environmental rights credits based on at least the received metrics.

17. The non-transitory computer readable medium according to claim 16, wherein the instructions further comprise:
training, by the processing server, a machine learning algorithm and/or a neural network for determining an environmental outcome of a piece of land, the training of the machine learning algorithm and/or a neural network including:
inputting, by the processing server, one or more datasets into the machine learning algorithm and/or a neural network, the one or more datasets including a known environmental outcome of one or more pieces of land;
generating, by the processing server, a trained machine learning algorithm and/or a neural network for determining an environmental outcome of a piece of land;
inputting, by the processing server, the metrics of the one or more parcels of land into the trained machine learning algorithm and/or a neural network;
receiving, by the processing server, an output from the trained machine learning algorithm and/or a neural network, the output including an
environmental outcome of the one or more parcels of land; and
generating, by the processing server, a report of the one or more parcels of land, the report including the environmental outcome of the one or more parcels of land.

18. The non-transitory computer readable medium according to claim 16 or 17, wherein the environmental outcome is a contractually agreed upon environmental outcome of the one or more parcels of land.
